**Europäisches Patentamt**

**European Patent Office**

**Office européen des brevets**

(19)

(11) Veröffentlichungsnummer : **0 357 863 B1**

## (12) EUROPÄISCHE PATENTSCHRIFT

(45) Veröffentlichungstag der Patentschrift :
**22.07.92 Patentblatt 92/30**

(51) Int. Cl.⁵ : **A46B 13/02**

(21) Anmeldenummer : **89102098.4**

(22) Anmeldetag : **08.02.89**

(54) **Elektrische Zahnbürste.**

(30) Priorität : **09.09.88 DE 3830649**

(43) Veröffentlichungstag der Anmeldung :
**14.03.90 Patentblatt 90/11**

(45) Bekanntmachung des Hinweises auf die
Patenterteilung :
**22.07.92 Patentblatt 92/30**

(84) Benannte Vertragsstaaten :
**AT BE CH DE ES FR GB GR IT LI LU NL SE**

(56) Entgegenhaltungen :
**EP-A- 0 254 397**
**US-A- 3 489 936**
**US-A- 3 661 018**

(73) Patentinhaber : **Gimelli Produktions AG**
**Eichenweg 2**
**CH-3052 Zollikofen (CH)**

(72) Erfinder : **Scherer, Benjamin**
**Albisriederstrasse 191**
**CH-8047 Zürich (CH)**

(74) Vertreter : **Schlagwein, Udo, Dipl.-Ing.**
**Anwaltsbüro Ruppert & Schlagwein**
**Frankfurter Strasse 34**
**W-6350 Bad Nauheim (DE)**

## Beschreibung

Die Erfindung betrifft eine elektrische Zahnbürste mit einem von Hand zu führenden, einen Motor und ein Getriebe aufweisenden Griffteil und einem Bürstenkörper, welcher einen Bürstenkopf mit mehreren, nebeneinander separat rotierenden, zylindrischen Borstenträgern hat, welche mittels einer Schubstange angetrieben sind, die von dem Motor in eine in Längsrichtung des Bürstenkörpers hin- und hergehende Bewegung versetzbar ist. Eine solche Zahnbürste ist Gegenstand der US-A-4,156, 620.

Bei der durch die eingangs genannte US-A-4,156,620 bekannten Zahnbürste ist eine Schubstange im Bereich des Bürstenkopfes als Zahnstange ausgebildet. Die Borstenträger tragen innerhalb des Bürstenkopfes jeweils ein Zahnrad, wobei alle Zahnräder einer Reihe von Borstenträgern ineinander kämmen und jedes zweite Zahnrad einer Reihe in eine Verzahnung der Schubstange eingreift. Dadurch drehen sich bei einer hin- und hergehenden Bewegung der Schubstange jeweils die benachbarten Borstenträger in entgegengesetztem Drehsinn, was für die Reinigung der Zähne vorteilhaft ist.

Die bekannte Zahnbürste ist wegen der vielen Zahnräder und der als Zahnstange ausgebildeten Schubstange relativ kompliziert im Aufbau. Um ein Verklemmen der Zahnräder auszuschließen, muß die Zahnbürste mit sehr engen Fertigungstoleranzen hergestellt werden. Das führt zu hohen Herstellungskosten und bringt die Gefahr mit sich, daß schon geringe Fertigungsungenauigkeiten zu einer Funktionsstörung führen können.

Der Erfindung liegt die Aufgabe zugrunde, eine elektrische Zahnbürste der eingangs genannten Art so auszubilden, daß die Drehbewegung der einzelnen Borstenträger mit möglichst einfachen Mitteln zu erreichen ist.

Diese Aufgabe wird erfindungsgemäß dadurch gelöst, daß die Schubstange innerhalb des Bürstenkopfes quer zu ihrer Haupterstreckungsrichtung verlaufende Nuten aufweist, in welche die Borstenträger jeweils mit einem parallel zu ihrer Drehachse verlaufenden Exzenter eingreifen.

Bei einer solchen Zahnbürste sind zur Herbeiführung der Drehbewegung der Borstenträger keine Zahnräder erforderlich. Die Drehbewegung der Borstenträger kommt auf einfache Weise dadurch zustande, daß die Schubstange durch ihre hin- und hergehende Bewegung die Exzenter verschiebt. Dadurch ist der Antrieb sehr einfach gestaltet und erfordet keine engen Fertigungstoleranzen. Der Begriff "quer zur Haupterstreckungsrichtung" bedeutet nicht, daß die Nuten rechtwinklig zur Haupterstreckungsrichtung verlaufen müssen; es genügt ein schräg zu ihr gerichteter Verlauf. Statt Nuten kommen als äquivalente Lösungen auch schräg verlaufende Vorsprünge in Frage. Die Schubstange muß schiefe Ebenen zum Verdrehen der Exzenter aufweisen.

Eine besonders vorteilhafte Ausgestaltung der Erfindung besteht darin, daß der Bürstenkopf nebeneinander zwei Reihen von Borstenträgern hat und in Mittelstellung der Schubstange die Exzenter der Borstenträger beider Reihen so ausgerichtet sind, daß sie in Querrichtung zum Bürstenkörper einander zugewandt sind. Dadurch, daß die Exzenter einander zugewandt sind, kann die Schubstange im Bereich des Bürstenkopfes schmal ausgebildet sein und es kommt zu einem entgegengesetzen Drehsinn der jeweils benachbarten Borstenträger einer Reihe. Würde man die Exzenter abwechselnd zur Bürstenkopfmitte und zur Außenseite des Bürstenkopfes anordnen, dann ergäbe sich bei allen Borstenträgern gleicher Drehsinn. Die Erfindung ermöglicht es somit, auf einfache Weise den Drehsinn der Borstenträger zu verändern.

Bei elektrischen Zahnbürsten, welche hinsichtlich des Bürstenkopfes entsprechend einer manuellen Zahnbürste gestaltet sind, hat es sich als vorteilhaft erwiesen, wenn der Bürstenkopf eine kreisende Bewegung ausführt. Diese erzeugt man mittels eines besonderen Getriebes, welches eine Zahnbürstenachse sowohl hin und her schiebt als auch um ihre Längsachse pendeln läßt. Als Beispiel für einen solchen Stand der Technik sei auf die US-A-3,160,902 verwiesen. Dieses bekannte Prinzip des Pendelns des Zahnbürstenkopfes läßt sich auf einfache Weise auch auf die erfindungsgemäße Zahnbürste übertragen, wenn die Schubstange unverdrehbar im Bürstenkörper und der Bürstenkörper auf dem Griffteil um seine Längsachse verdrehbar angeordnet ist und wenn das Getriebe zusätzlich zum Verschieben der Schubstange in Längsrichtung zum alternierenden Verdrehen der Schubstange um ihre Längsachse ausgebildet ist.

Der Bürstenkörper ist kostengünstig herstellbar und kann leicht ausgewechselt werden, wenn gemäß einer anderen Ausgestaltung der Erfindung der Bürstenkörper lösbar mit dem Griffteil verbunden ist und die Schubstange an ihrem griffteilseitigen Ende zum Verbinden mit der Zahnbürstenachse eine Schnappverbindung aufweist.

Statt den gesamten Bürstenkörper um seine Längsachse pendeln zu lassen, kann man auch die einzelnen Borstenträger abwechselnd mehr oder weniger weit aus dem Bürstenkörper ausfahren, wenn gemäß einer anderen Ausbildung der Erfindung die Schubstange um ihre Längsachse verdrehbar im Bürstenkörper und der Bürstenkörper auf dem Griffteil um seine Längsachse unverdrehbar angeordnet ist und wenn die Borstenträger im Bürstenkopf in Bezug auf ihre Drehachse axial verschiebbar angeordnet sind.

Ein besonders einfaches Getriebe zur Herbeiführung der Drehbewegung und pendelnden Bewegung zeichnet sich dadurch aus, daß es ein von einem Kegelritzel des Motors angetriebenes, um eine quer zur Schubstange verlaufende Drehachse umlaufendes Kegelrad aufweist, welches mit einem parallel zu seiner Drehachse ausgerichteten Exzenterzapfen in eine Aufnahme einer Schwinge greift, die auf einer im Griffteil axial verschiebbar und drehbar angeordneten und in Längsrichtung des Griffteiles ausgerichteten Zahnbürstenachse befestigt ist.

Das Getriebe arbeitet ganz besonders reibungsarm und ist sehr kostengünstig herstellbar, wenn gemäß einer anderen Ausgestaltung der Erfindung auf dem Exzenterzapfen verdrehbar ein in eine Aufnahme der Schwinge eingesetzter Gleitstein angeordnet ist und wenn die beiden achsparallel zur Zahnbürstenachse verlaufenden Seitenflächen des Gleitsteines und/oder die entsprechenden Seitenflächen der Aufnahme zur Ermöglichung einer Kippbewegung der Schwinge gekrümmt oder abgeschrägt verlaufen.

Die Kippbewegung der Schwinge ergibt sich besonders einfach, wenn gemäß einer anderen Ausgestaltung der Erfindung der die Aufnahme für den Gleitstein aufweisende Teil der Schwinge radialen Abstand von der Zahnbürstenachse hat. Bei dieser Ausgestaltung greift der Gleitstein mit beträchtlichem Abstand von der Schwenkachse der Schwinge, die zugleich die Zahnbürstenachse ist, an der Schwinge an. Dadurch ergibt sich ein relativ großes Kippmoment, so daß die pendelnde Bewegung des Bürstenkörpers mit ausreichend großer Kraft erfolgt.

Sehr platzsparend ist eine Ausführungsform, bei der der Exzenterzapfen von der Seite der Zahnbürste her in den Gleitstein greift.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in

Fig. 1 einen schematischen Längsschnitt durch eine Zahnbürste nach der Erfindung,

Fig. 2 eine perspektivische Explosionsdarstellung eines Bürstenkörpers der Zahnbürste,

Fig. 3 einen Längsschnitt durch den vorderen Bereich des Bürstenkörpers,

Fig. 4 eine Draufsicht auf den vorderen Bereich des Bürstenkörpers,

Fig. 5 einen Längsschnitt durch das Getriebe der Zahnbürste,

Fig. 6 eine Draufsicht auf eine Schwinge des Getriebes mit den angrenzenden Bauteilen,

Fig. 7 einen Querschnitt durch die Zahnbürste entlang der Linie VII - VII in Figur 5.

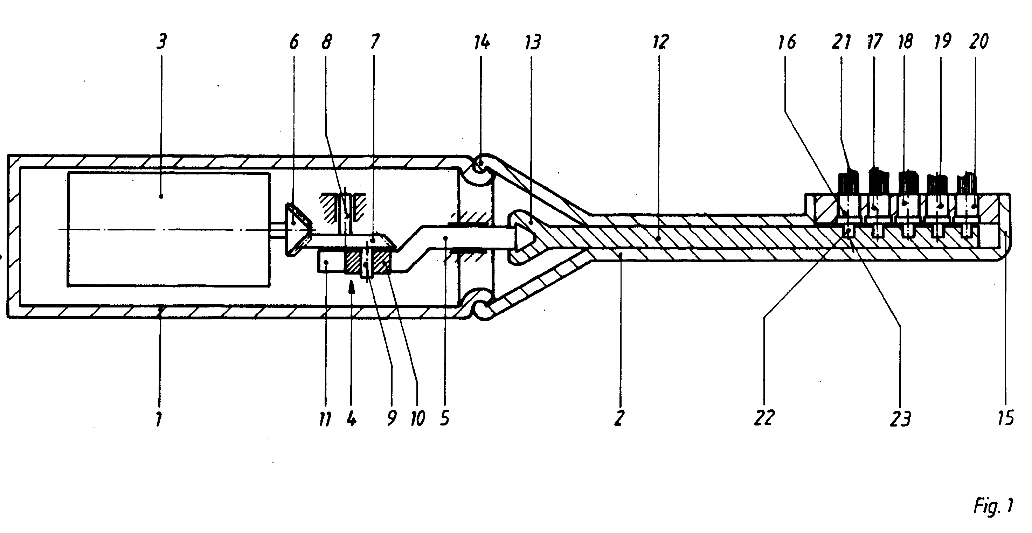

Die in Figur 1 als Ganzes dargestellte Zahnbürste besteht aus einem Griffteil 1 und einem darauf lösbar und drehbar befestigten Bürstenkörper 2. Im Griffteil 1 ist ein Motor 3 angeordnet, der über ein Getriebe 4 eine Zahnbürstenachse 5 derart antreibt, daß diese gleichzeitig eine Pendelbewegung um ihre Längsachse und eine axiale Verschiebebewegung ausführt. Das Getriebe 4 hat ein vom Motor 3 angetriebenes Kegelritzel 6, welches ein Kegelrad 7 antreibt, das um eine quer zum Motor 3 angeordnete Drehachse 8 drehbar ist. Dieses Kegelrad 7 hat parallel zu seiner Drehachse 8 einen Exzenterzapfen 9, auf dem verdrehbar ein Gleitstein 10 sitzt, der unverdrehbar innerhalb einer Schwinge 11 angeordnet ist. Durch die kreisförmige Bewegungsbahn des Exzenterzapfens 9 wird die Schwinge 11 nach vorn und hinten bewegt. Zur Seite kann sie sich nicht verschieben, da die Schwinge 11 fest mit der Zahnbürstenachse 5 verbunden ist und die Zahnbürstenachse 5 im Griffteil 1 axial verschiebbar und verdrehbar gehalten ist. Diese Führung der Zahnbürstenachse 5 hat zur Folge, daß die Schwinge 11 mit der Zahnbürstenachse 5 um die Längsachse der Zahnbürstenachse 5 kippt, wenn der Exzenterzapfen sich aus der Zeichnungsebene heraus bewegt, was später noch genauer erläutert wird.

Im Bürstenkörper 2 ist eine Schubstange 12 axial verschieblich, jedoch relativ zum Bürstenkörper 2 unverdrehbar angeordnet. Diese Schubstange 2 hat an ihrem griffteilseitigen Ende eine Schnappverbindung 13, mit der sie mit der Zahnbürstenachse 5 relativ zur Zahnbürstenachse 5 unverdrehbar verrastet ist. Der Bürstenkörper 2 ist entsprechend mit einer Rastverbindung 14 lösbar mit dem Griffteil verbunden. Diese Rastverbindung 14 ist jedoch so gestaltet, daß sich der Bürstenkörper 2 um seine Längsachse relativ zum Griffteil 1 drehen kann, was notwendig ist, da sich die Zahnbürstenachse 5 und damit auch die Schubstange 12 um die Längsachse der Zahnbürste begrenzt verdrehen können.

Der Bürstenkörper 2 hat an seinem vorderen Ende einen Bürstenkopf 15, in den verdrehbar mehrere zylindrische Borstenträger 16 - 20 eingesetzt sind, die mit Borstenbüscheln 21 aus dem Bürstenkopf 15 herausragen. Bürstenkopfinnenseitig haben die Borstenträger 16 - 20 jeweils einen Exzenter 22, der in eine quer verlaufende Nut 23 der Schubstange 12 eingreift. Bewegt sich die Schubstange 12 hin und her, dann werden die Exzenter 23 verschoben und dadurch die Borstenträger 16 bis 20 verdreht.

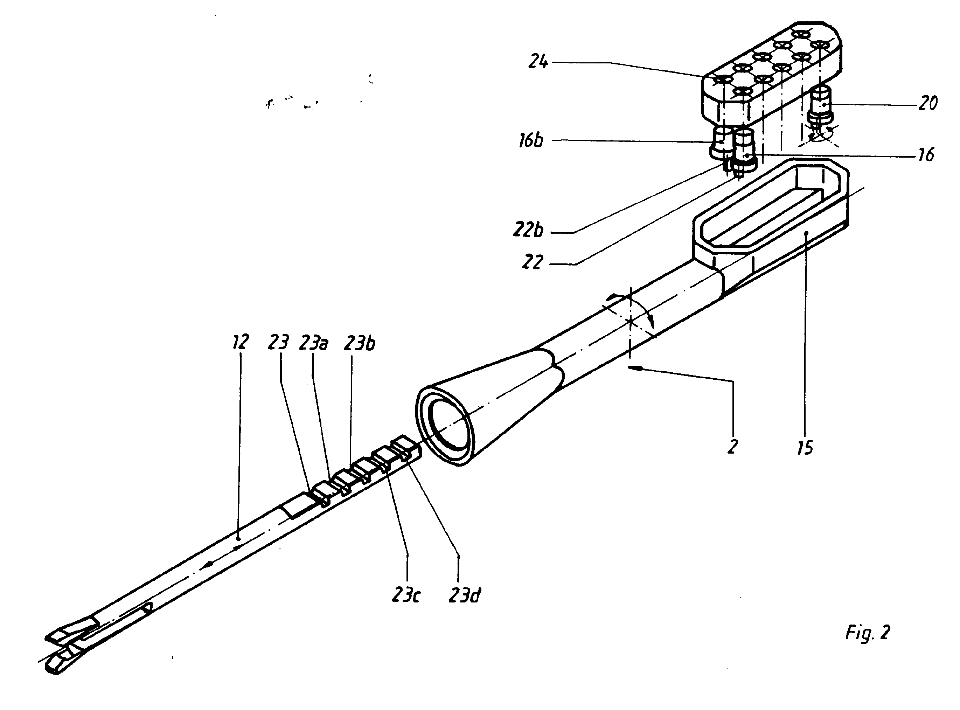

Die Figur 2 verdeutlicht die Gestaltung des Bürstenkörpers 2. Zu erkennen ist, daß die Schubstange 12 an ihrem bürstenkopfseitigen Ende hintereinander insgesamt fünf querverlaufende Nuten 23, 23a, 23b, 23c und 23d hat, in die die Exzenter 22 der Borstenträger 16 - 20 einzugreifen vermögen. Der Bürstenkopf 15 ist bei diesem Ausführungsbeispiel so ausgebildet, daß er parallel zu der Reihe von Borstenträgern 16 - 20 eine weitere Reihe von Borstenträgern aufweist, von denen der Borstenträger 16b dargestellt ist. Auch der Borstenträger 16b und die übrigen Borstenträger seiner Reihe greifen mit jeweils einem Exzenter 22b in diese Nuten 23, 23a, 23b, 23c, 23d der Schubstange 12. Wie die Figur 2 zeigt, sind alle Borstenträger 16 - 20 und 16b in einem Deckel 24 drehbar angeordnet, der von oben her als Einsatz in den Bürstenkopf 15 einsetzbar ist.

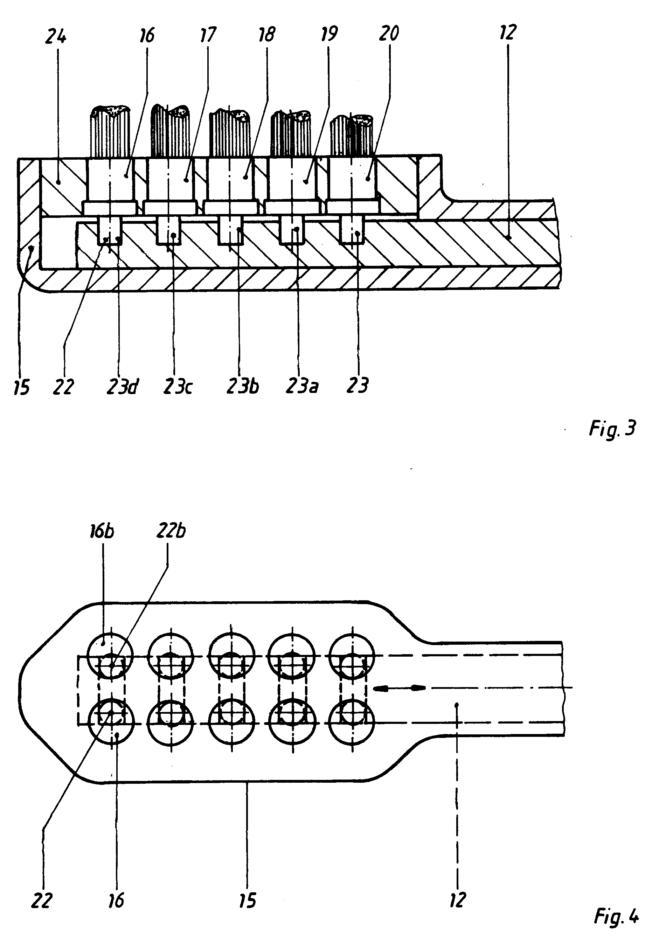

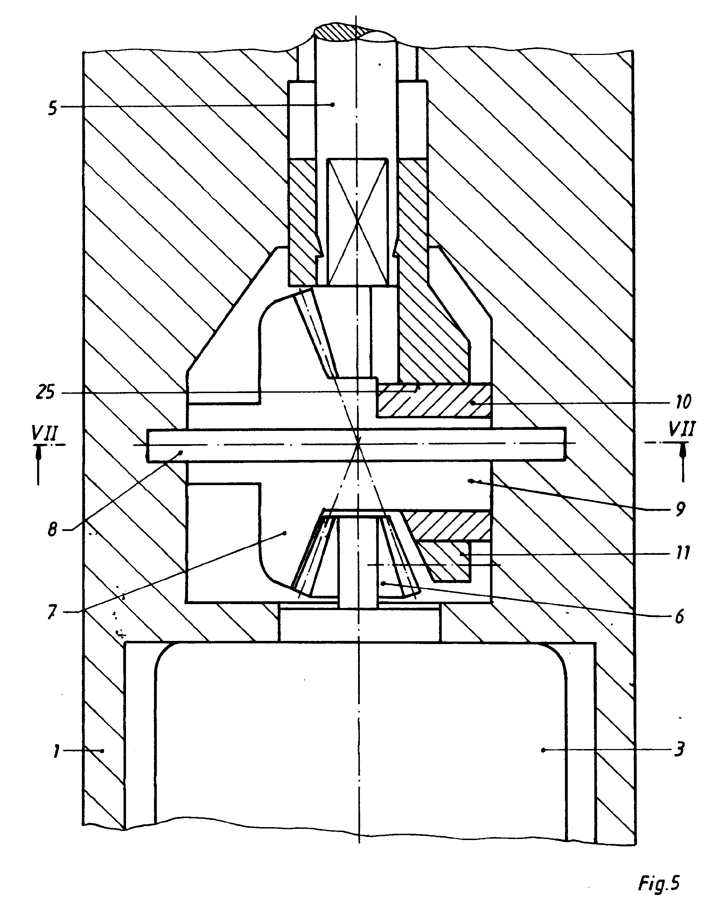

Die Schnittdarstellung gemäß Figur 3 zeigt, wie die Borstenträger 16 - 20 mit ihrem jeweiligen Exzenter 22 in die jeweilige Nut 23, 23a, 23b, 23c, 23d der Schubstange 12 eingreifen. Figur 4 verdeutlicht, daß in Mittelstellung der Schubstange 12 die Exzenter 22, 22b und entsprechend die übrigen Exzenter in Querrichtung des Bürstenkopfes 15 einander zugewandt sind.

Die Figur 5 zeigt gegenüber Figur 1 vergrößert, wie der Motor 3 mit seinem Kegelritzel 6 das Kegelrad 7 antreibt. Die Drehachse 8 dieses Kegelrades 7 ist an beiden Enden im Gehäuse des Griffteiles 1 gelagert. Zu erkennen ist, daß die Schwinge 11 eine Aufnahme 25 hat, in der der Gleitstein 10 sitzt. In diesen Gleitstein 10 greift drehbar der Exzenterzapfen 9. Die Schwinge 11 ist unverdrehbar und unverschieblich mit der Zahnbürstenachse 5 verbunden.

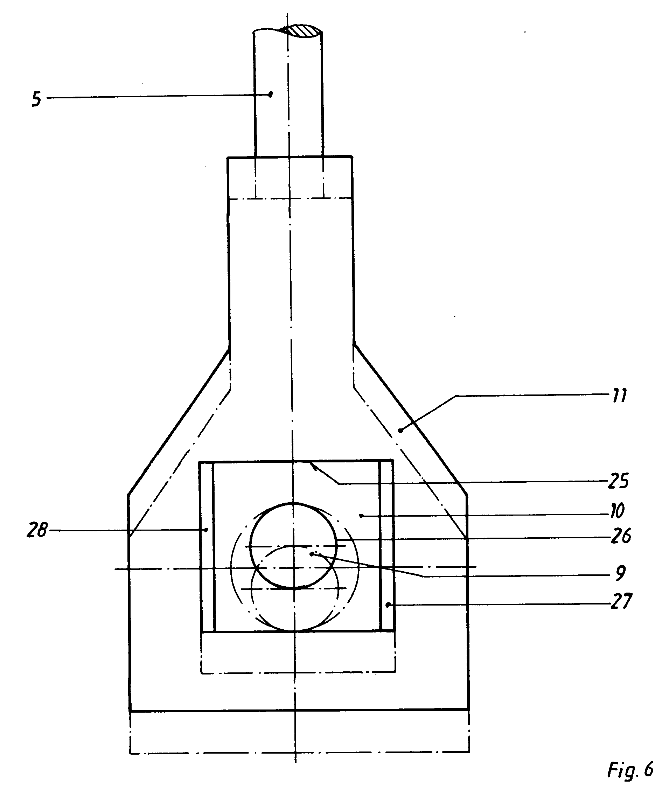

Die Figur 6 verdeutlicht, daß die Aufnahme 25 der auf der Zahnbürstenachse 4 drehfest gehaltenen Schwinge 11 im Querschnitt rechteckig und der Gleitstein 10 entsprechend ebenfalls rechteckig ist. Dieser Gleitstein 10 hat eine Bohrung 26, in die der Exzenterzapfen 9 greift. Dreht sich der Exzenterzapfen 9 um 180 Grad und gelangt dadurch in seine strichpunktiert dargestellte, untere Stellung, so wird die Schwinge 11 entsprechend nach unten bewegt, so daß auch die Zahnbürstenachse 5 axial verschoben wird. Da der Exzenterzapfen 9 sich in seinen nicht gezeigten Zwischenstellungen seitlich der Zahnbürstenachse 5 befindet, müßte eigentlich auch die Schwinge 11 seitlich verschoben werden, was jedoch nicht möglich ist, weil die Zahnbürstenachse 5 seitlich fixiert ist. Statt einer Seitwärtsbewegung führt die Schwinge 11 eine Kippbewegung aus, die dadurch möglich wird, daß der Gleitstein 10 an zwei Seitenflächen 27, 28 bogenförmig gekrümmt ausgebildet ist und die Zahnbürstenachse 5 in Figur 6 gesehen unterhalb des Gleitsteines 10 verläuft. Dadurch entsteht ein Kippmoment, wenn der Gleitstein 10 in seiner Aufnahme 15 die Schwinge 11 zur Seite hin drückt, so daß diese um die Zahnbürstenachse 5 kippt und dabei die Zahnbürstenachse 5 entsprechend verdreht.

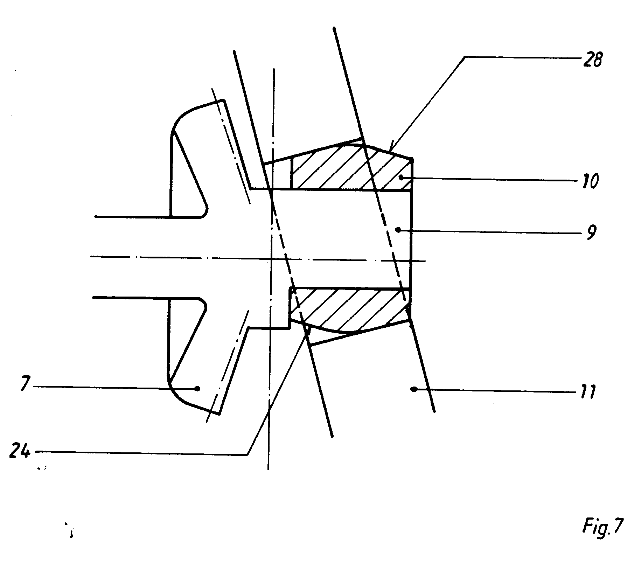

Die Figur 7 verdeutlicht, daß die Seitenflächen 27, 28 des Gleitsteines 10 bogenfömig gekrümmt ausgebildet sind. Dadurch kann die Schwinge 11 in der dargestellten, gegenüber Figur 6 um 90 Grad verdrehten Stellung des Exzenterzapfens 9 die gekippte Stellung einnehmen, so daß sie sich nicht zur Seite bewegen muß.

Auflistung der verwendeten Bezugszeichen

1 Griffteil
2 Bürstenkörper
3 Motor
4 Getriebe
5 Zahnbürstenachse
6 Kegelritzel
7 Kegelrad
8 Drehachse
9 Exzenterzapfen
10 Gleitstein
11 Schwinge
12 Schubstange
13 Schnappverbindung
14 Rastverbindung
15 Bürstenkopf
16 Borstenträger
17 Borstenträger
18 Borstenträger
19 Borstenträger
20 Borstenträger
21 Borstenbüschel
22 Exzenter
23 Nut
24 Deckel
25 Aufnahme
26 Bohrung
27 Seitenfläche
28 Seitenfläche

EP 0 357 863 B1

**Patentansprüche**

1. Elektrische Zahnbürste mit einem von Hand zu führenden, einen Motor (3) und ein Getriebe (4) aufweisenden Griffteil (1) und einem Bürstenkörper (2), welcher einen Bürstenkopf (15) mit mehreren, nebeneinander separat rotierenden, zylindrischen Borstenträgern (16 - 20) hat, welche mittels einer Schubstange (12) angetrieben sind, die von dem Motor (3) in eine in Längsrichtung des Bürstenkörpers (2) hin- und hergehende Bewegung versetzbar ist, dadurch gekennzeichnet, daß die Schubstange (12) innerhalb des Bürstenkopfes (15) quer zu ihrer Haupterstreckungsrichtung verlaufende Nuten (23) aufweist, in welche die Borstenträger (16 - 20) jeweils mit einem parallel zu ihrer Drehachse verlaufenden Exzenter (22) eingreifen.

2. Elektrische Zahnbürste nach Anspruch 1, dadurch gekennzeichnet, daß der Bürstenkopf (15) nebeneinander zwei Reihen von Borstenträgern (16, 16b) hat und in Mittelstellung der Schubstange (12) die Exzenter (22, 22b) der Borstenträger (16, 16b) beider Reihen so ausgerichtet sind, daß sie in Querrichtung zum Bürstenkörper (2) einander zugewandt sind.

3. Elektrische Zahnbürste nach den Ansprüchen 1 und 2, dadurch gekennzeichnet, daß die Schubstange (12) unverdrehbar im Bürstenkörper (2) und der Bürstenkörper (2) auf dem Griffteil (1) um seine Längsachse verdrehbar angeordnet ist und daß das Getriebe (4) zusätzlich zum Verschieben der Schubstange (12) in Längsrichtung zum alternierenden Verdrehen der Schubstange (12) um ihre Längsachse ausgebildet ist.

4. Elektrische Zahnbürste nach Anspruch 3, dadurch gekennzeichnet, daß der Bürstenkörper (2) lösbar mit dem Griffteil (1) verbunden ist und die Schubstange (12) an ihrem griffteilseitigen Ende zum Verbinden mit der Zahnbürstenachse (5) eine Schnappverbindung (13) aufweist.

5. Elektrische Zahnbürste nach zumindest einem der vorangehenden Ansprüche, dadurch gekennzeichnet, daß die Schubstange (12) um ihre Längsachse verdrehbar im Bürstenkörper (2) und der Bürstenkörper (2) auf dem Griffteil (1) um seine Längsachse unverdrehbar angeordnet ist und daß die Borstenträger (16 - 20) im Bürstenkopf (15) in Bezug auf ihre Drehachse axial verschiebbar angeordnet sind.

6. Elektrische Zahnbürste nach zumindest einem der vorangehenden Ansprüche, dadurch gekennzeichnet, daß das Getriebe (4) ein von einem Kegelritzel (6) des Motors (3) angetriebenes, um eine quer zur Schubstange (12) verlaufende Drehachse umlaufendes Kegelrad (7) aufweist, welches mit einem parallel zu seiner Drehachse ausgerichteten Exzenterzapfen (9) in eine Aufnahme (25) einer Schwinge (11) greift, die auf einer im Griffteil (1) axial verschiebbar und drehbar angeordneten und in Längsrichtung des Griffteiles (1) ausgerichteten Zahnbürstenachse (5) befestigt ist.

7. Elektrische Zahnbürste nach Anspruch 5, dadurch gekennzeichnet, daß auf dem Exzenterzapfen (9) verdrehbar ein in die Aufnahme (25) der Schwinge (11) eingesetzter Gleitstein (10) angeordnet ist und daß die beiden achsparallel zur Zahnbürstenachse verlaufenden Seitenflächen (27, 28) des Gleitsteines (10) und/oder die entsprechenden Seitenflächen der Aufnahme (25) zur Ermöglichung einer Kippbewegung der Schwinge (11) gekrümmt oder abgeschrägt verlaufen.

8. Elektrische Zahnbürste nach zumindest einem der vorangehenden Ansprüche, dadurch gekennzeichnet, daß der die Aufnahme (25) für den Gleitstein (10) aufweisende Teil der Schwinge (11) radialen Abstand von der Zahnbürstenachse (5) hat.

9. Elektrische Zahnbürste nach zumindest einem der vorangehenden Ansprüche, dadurch gekennzeichnet, daß der Exzenterzapfen (9) von der Seite der Zahnbürste her in den Gleitstein (10) greift.

**Claims**

1. An electric toothbrush with a handle (1) which is to be manually guided and comprises a motor (3) and gearing (4), and with a brush member (2) which has a brush head (15) with several cylindrical bristle holders (16 to 20) rotating separately next to one another, which are driven by means of a connecting rod (12) which can be set into reciprocating movement in the longitudinal direction of the brush member (2) by the motor (3), characterised in that the connecting rod (12) has, inside the brush head (15), grooves (23) which run transversely to its main extension and in which the bristle holders (16 to 20) each engage with a cam (22) running parallel to their axis of rotation.

2. An electric toothbrush according to Claim 1, characterised in that the brush head (15) has two adjacent rows of bristle holders (16, 16b) and, in the central position of the connecting rod (12), the cams (22, 22b) of the bristle holders (16, 16b) in the two rows are orientated such that they face one another in the transverse direction to the brush member (2).

3. An electric toothbrush according to Claims 1 and 2, characterised in that the connecting rod (12) is arranged non-rotatably in the brush member (2) and the brush member (2) on the handle (1) is arranged rotatably about its longitudinal axis and in that the gearing (4) is constructed for alternately rotating the connecting

5

rod (12) about its longitudinal axis in addition to shifting the connecting rod (12) in the longitudinal direction.

4. An electric toothbrush according to Claim 3, <u>characterised in that</u> the brush member (2) is detachably connected to the handle (1) and the connecting rod (12) has, at its handle end, a snap connection (13) for connection to the toothbrush shaft (5).

5. An electric toothbrush according to at least one of the preceding claims, <u>characterised in that</u> the connecting rod (12) is arranged rotatably about its longitudinal axis in the brush member (2) and the brush member (2) is arranged non-rotatably about its longitudinal axis on the handle (1) and in that the bristle holders (16 to 20) in the brush head (15) are arranged axially movably with respect to their axis of rotation.

6. An electric toothbrush according to at least one of the preceding claims, <u>characterised in that</u> the gearing (4) has a bevel wheel (7) which is driven by a bevel pinion (6) of the motor (3), revolves about a pivot pin running transversely to the connecting rod (12) and engages with an eccentric peg (9) orientated parallel to its pivot pin in a recess (25) in a rocker (11) arranged on a toothbrush shaft (5) which is arranged axially movably and rotatably in the handle (1) and is orientated in the longitudinal direction of the handle (1).

7. An electric toothbrush according to Claim 5, <u>characterised in that</u> a sliding block (10) inserted into the recess (25) in the rocker (11) is arranged rotatably on the eccentric peg (9) and in that the two lateral faces (27, 28) of the sliding block (10) running parallel to the axis of the toothbrush shaft and/or the corresponding lateral faces of the recess (25) run in bent or bevelled fashion to allow a rocking movement of the rocker (11).

8. An electric toothbrush according to at least one of the preceding claims, <u>characterised in that</u> the part of the rocker (11) comprising the recess (25) for the sliding block (10) is at a radial distance from the toothbrush shaft (5).

9. An electric toothbrush according to at least one of the preceding claims, <u>characterised in that</u> the eccentric pep (9) engages from the side of the toothbrush into the sliding block (10).

## Revendications

1. Brosse à dents électrique, avec une poignée (1) devant être tenue par la main, qui comporte un moteur (3) et un entrainement (4) et avec un corps de brosse (2), qui comporte une tête de brosse (15) qui comporte plusieurs supports de soies cylindriques (16-20) montés rotatifs séparément l'un à côté de l'autre, qui sont entrainés au moyen d'une bielle (12), qui peut être déplacée par le moteur (3) dans un mouvement de va et vient selon la direction longitudinale du corps de brosse (2), <u>caractérisée en ce que</u> la bielle (12) comporte à l'intérieur de la tête de brosse (15), s'étendant perpendiculairement à sa direction principale, des encoches (23) dans lesquelles les supports de soies (16-20) viennent chacun en prise au moyen d'un excentrique (22) s'étendant parallèlement à leur axe de rotation.

2. Brosse à dents électrique, selon la revendication 1, <u>caractérisée en ce que</u> la tête de brosse (15) comporte côte à côte une double rangée de supports de soles (16,16b) et que en position médiane de la bielle (12) les excentriques (22,22b) des supports de soies ( 16, 16b) des deux rangées sont disposés de manière telle qu'ils soient chacun tournés en direction perpendiculaire par rapport au corps de brosse (2).

3. Brosse à dents électrique selon les revendications 1 et 2, <u>caractérisée en ce que</u> la bielle (12) est montée fixe en déplacement dans le corps de brosse (2), que le corps de brosse (2) est monté déplaçable selon son axe longitudinal sur la poignée (1) et que l'entrainement est conformé en outre pour le coulissement de la bielle (12) en direction longitudinale, pour le mouvement alternatif de la bielle (12) selon son axe longitudinal.

4. Brosse à dents électrique selon la revendication 3, <u>caractérisée en ce que</u> le corps de brosse (2) est relié de manière amovible à la poignée (1) et que la bielle (12) comporte à son extrémité du côté de la poignée un assemblage à enclenchement (13) pour sa liaison avec l'axe (5) de la brosse à dents.

5. Brosse à dents électrique selon au moins l'une des revendications précédentes, <u>caractérisée en ce que</u> la bielle (12) est montée déplaçable selon son axe longitudinal dans le corps de brosse (2), que le corps de brosse (2) est monté non déplaçable selon son axe longitudinal sur la poignée (1) et que les supports de soies (16-20) sont montés coulissants axialement dans la tête de brosse (15) par rapport à son axe de rotation.

6. Brosse à dents électrique selon au moins l'une des revendications précédentes, <u>caractérisée en ce que</u> l'entrainement (4) comporte une roue conique (7), entrainée par un pignon (6) du moteur (3), ladite roue se déplaçant autour d'un axe s'étendant perpendiculairement à la bielle (12), et venant en prise dans un évidement (25) d'une manivelle (11) avec un téton excentrique (9) disposé parallèlement à son axe de rotation, ladite manivelle étant fixée sur un axe de brosse à dent (5) coulissant axialement, mobile en rotation dans la poignée (1) et disposé en direction longitudinale de la poignée (1).

7. Brosse à dents électrique selon la revendication 5, <u>caractérisée en ce que</u> une pièce d'articulation (10) disposée dans l'évidement (25) de la manivelle (11) est disposée déplaçable sur le téton excentrique (9) et que les deux surfaces latérales (27,28) de la pièce d'articulation (10) s'étendent axialement parallèles à l'axe de la brosse à dents et/ou les surfaces latérales correspondantes de l'évidement (25) sont conformées courbées ou chanfreinées pour permettre un mouvement de basculement de la manivelle (11).

8. Brosse à dents électrique selon au moins l'une des revendications précédentes, caractérisée en ce que la partie de la manivelle (11) comportant un évidement (25) pour la pièce d'articulation (10) présente un écart radial par rapport à l'axe de brosse à dents (5).

9. Brosse à dents électrique selon au moins l'une des revendications précédentes, caractérisée en ce que le téton excentrique (9) vient en prise dans la pièce d'articulation (10) à partir du côté de la brosse à dents.

Fig. 1

EP 0 357 863 B1

Fig. 2

Fig. 3

Fig. 4

Fig.5

Fig. 6

Fig.7